# Europäisches Patentamt

## European Patent Office

## Office européen des brevets

(19)

(11) Veröffentlichungsnummer: **0 253 388**
**B1**

(12) **EUROPÄISCHE PATENTSCHRIFT**

(45) Veröffentlichungstag der Patentschrift:
23.11.89

(51) Int. Cl.⁴: **A01G 25/16, F16K 27/00**

(21) Anmeldenummer: **87110288.5**

(22) Anmeldetag: **16.07.87**

(54) **Einstellarmatur für Feldspritzleitungen.**

(30) Priorität: **18.07.86  DE 3624425**

(43) Veröffentlichungstag der Anmeldung:
**20.01.88 Patentblatt 88/3**

(45) Bekanntmachung des Hinweises auf die Patenterteilung:
**23.11.89 Patentblatt 89/47**

(84) Benannte Vertragsstaaten:
**AT BE CH FR GB LI NL SE**

(56) Entgegenhaltungen:
**EP-A- 0 169 260**
**FR-A- 2 347 593**
**FR-A- 2 350 051**
**US-A- 2 641 280**

(73) Patentinhaber: **Gebr. Holder GmbH & Co., Stuttgarter Strasse 40-46, D-7430 Metzingen(DE)**

(72) Erfinder: **Nells, Wolfgang Olaf, Schillerstrasse 19, D-7421 Mehrstetten(DE)**
Erfinder: **Grosse-Brockhoff, Franz-J., Haydnstrasse 11, D-7430 Metzingen(DE)**

(74) Vertreter: **Hoeger, Stellrecht & Partner, Uhlandstrasse 14 c, D-7000 Stuttgart 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Einstellarmatur zur Steuerung der Flüssigkeitszufuhr zu einer mehrere Leitungsabschnitte umfassenden Feldspritzleitung, welche ein Filter in Form eines Siebzylinders für die Flüssigkeit sowie ein Ventilgehäuse mit mehreren Gehäusesegmenten aufweist, deren jedes ein sogenanntes Teilbreitenventil zum Ein- bzw. Abschalten eines Leitungsabschnitts der Feldspritzleitung besitzt, wobei das Ventilgehäuse einen sich von einer Zulauföffnung des letzteren durch die Gehäusesegmente hindurcherstreckenden Zulauf-Längskanal sowie einen Rücklauf-Längskanal bildet, der sich gleichfalls durch die Gehäusesegmente hindurcherstreckt und zu einer Rücklauföffnung des Gehäuses führt und wobei ferner in jedem Gehäusesegment der Zulauf-Längskanal durch das Teilbreitenventil wahlweise mit einer an die Feldspritzleitung anschliessbaren Auslassöffnung des Gehäusesegments oder mit dem Rücklauf-Längskanal verbindbar ist.

Bei einer bekannten derartigen Einstellarmatur, die von der Firma Gebr. Holder GmbH & Co. angeboten wird, ist zwischen einer ersten Baugruppe mit einem Druckeinstellventil und einem Gesamtabschaltventil und einer Verteileinrichtung, die das Ventilgehäuse mit den Teilbreitenventilen umfasst, ein ein ausbaubares Druckfilter aufnehmendes Filtergehäuse angeordnet.

Das Druckfilter hat die Gestalt eines Siebzylinders, der aufrechtstehend im Filtergehäuse angeordnet ist und sich aus diesem nach unten ausbauen lässt, nachdem ein Bodenverschlussteil des Filtergehäuses abgeschraubt wurde. Dieses Bodenverschlussteil trägt einen Kugelhahn mit einem Auslassstutzen, die der Schnellreinigung des Siebzylinders dienen, wozu der Kugelhahn geöffnet und so der Siebzylinder in Längsrichtung gespült wird - im Betrieb strömt die Flüssigkeit in axialer Richtung in den Siebzylinder ein und durchströmt diesen in radialer Richtung von innen nach aussen.

Da Feldspritzleitungen üblicherweise aus mehreren Leitungsabschnitten zusammengesetzt sind, deren Anzahl vom Anwendungsfall abhängt, bei der geschilderten bekannten Einstellarmatur Siebzylinder und Filtergehäuse aber immer gleich gross sind, hängt beim Stand der Technik die wirksame Siebfläche pro Leitungsabschnitt der Feldspritzleitung von der Anzahl dieser Leitungsabschnitte ab und beträgt z.B. bei drei Leitungsabschnitten ca. 2.400 mm², bei fünf Leitungsabschnitten ca. 1.450 mm² und bei sieben Leitungsabschnitten ca. 1.050 mm² je Feldspritzleitungsabschnitt.

Der Erfindung lag die Aufgabe zugrunde, die bekannte Einstellarmatur so zu verbessern, dass sie sich nicht nur billiger herstellen, sondern hinsichtlich der wirksamen Siebfläche des Druckfilters an die Länge der Feldspritzleitung anpassen lässt. Erfindungsgemäss wird dies dadurch bewerkstelligt, dass der Siebzylinder in den Zulauf-Längskanal des Teilbreitenventilgehäuses eingesetzt und in seiner Längsrichtung aus den Gehäusesegmenten zugeordneten Filtersegmenten zusammengesetzt ist. Erfindungsgemäss wird also der vom Zulauf-Längskanal gebildete Hohlraum als Aufnahmeraum für den Siebzylinder genutzt, so dass ein separates Filtergehäuse eingespart werden kann, und ausserdem lässt sich die Länge des Siebzylinders und damit die wirksame Siebfläche an die Länge der Feldspritzleitung anpassen, indem eine mehr oder minder grosse Zahl von Filtersegmenten zu einem Siebzylinder zusammengesetzt wird.

Bei einer besonders vorteilhaften Ausführungsform der Erfindung sind die Filtersegmente identisch ausgebildet, wodurch sich die Herstellungskosten noch weiter reduzieren lassen.

Es wäre z.B. denkbar, die Filtersegmente über Zugschrauben von der Länge des Siebzylinders zusammenzuhalten und gegeneinander zu pressen. Vorteilhafter ist es jedoch, die Filtersegmente an ihren Enden mit Rastelementen zum Verrasten der Filtersegmente aneinander zu versehen, wobei diese Rastelemente ohne weiteres so ausgebildet werden können, dass sich eine mehr oder minder gute Abdichtung der Stirnenden der Filtersegmente gegeneinander ergibt.

Des weiteren wird empfohlen, die Länge der Filterelemente gleich der Länge des zugehörigen Gehäusesegments zu wählen und insbesondere alle Filterelemente, ebenso wie alle Gehäusesegmente, gleich lang zu gestalten, obwohl es grundsätzlich denkbar wäre, den einem Gehäuse segment zugeordneten Siebzylinderabschnitt aus mehreren Filterelementen aufzubauen oder ein Filterelement sich über mehrere Gehäusesegmente erstrecken zu lassen.

Um das Filter möglichst einfach und rasch aus- und einbauen zu können, wird empfohlen, das Filter mit einem in der Zulauföffnung liegenden Anschlußstück zu versehen, welches mittels eines Sicherungselements sowie einer Dichtung lösbar und abgedichtet im Ventilgehäuse angeordnet ist. Das Anschlußstück könnte an ein besonderes Filtersegment angeformt sein, um jedoch nur eine einzige Art Filtersegment herstellen zu müssen, ist bei einer bevorzugten Ausführungsform das Anschlußstück in gleicher Weise wie ein Filtersegment mit dem ersten Filtersegment des Siebzylinders verrastbar. Bei dem Sicherungselement könnte es sich gleichfalls um ein Rastelement handeln; bevorzugt wird jedoch ein Sicherungselement in Form einer haarnadelförmigen Klammer, deren Schenkel von aussen in Querbohrungen des Ventilgehäuses sowie in eine Aussenumfangsnut des Filters einschiebbar sind, wobei die Querbohrungen und die Umfangsnut zweckmässigerweise vor einem O-Ring liegen, der die Abdichtung zwischen dem Anschlußstück und dem Ventilgehäuse übernimmt, so dass das Ventilgehäuse an den erwähnten Querbohrungen nicht lecken kann.

Um zur Kontrolle des Verschmutzungsgrades des Filters den Siebzylinder nicht ausbauen zu müssen, wird schliesslich empfohlen, die Einstellarmatur so auszubilden, dass die Gehäusesegmente ein Kontrollfenster zur optischen Prüfung des Verschmutzungsgrads des Filters besitzen. Wird das Kontrollfenster als durch einen durchsichtigen, vorzugsweise eingeschraubten Stopfen verschlossene Gehäuseöffnung ausgebildet, so lässt sich bei entsprechender Anordnung des Kontrollfensters auch noch ein weiterer Vorteil erzielen, dass nämlich die Montage von im Gehäusesegment gehaltenen Teilen leichter durchgeführt werden kann oder überhaupt erst möglich wird - es ist ja gleichgültig, an welcher Stelle - in Längs- und Umfangsrichtung des Siebzylinders - das Filter in einem Gehäusesegment betrachtet wird, so dass die Lage des Kontrollfensters bezüglich der Montageerleichterung von Teilen optimal gewählt werden kann.

Durch die Erfindung wurde also eine billig herzustellende Einstellarmatur geschaffen, die es z.B. auch dem Benutzer ermöglicht, durch Zukauf von Ventilgehäuse- und Filtersegmenten die Einstellarmatur an eine vergrösserte Feldspritzleitung anzupassen.

Weitere Merkmale, Vorteile und Einzelheiten der Erfindung ergeben sich aus der nachfolgenden Beschreibung und/oder der beigefügten zeichnerischen Darstellung einer besonders vorteilhaften Ausführungsform der erfindungsgemässen Verteileinrichtung; in der Zeichnung zeigen:

Fig. 1: eine Seitenansicht der Verteileinrichtung mit Ventilgehäuse und Teilbreitenventilen;

Fig. 2: einen Schnitt nach der Linie 2-2 in Fig. 1;

Fig. 3: einen Schnitt nach der Linie 3-3 in Fig. 2 und

Fig. 4: einen Schnitt längs einer Durchmesserebene durch ein Filtersegment mit aufgerastetem Anschlußstück.

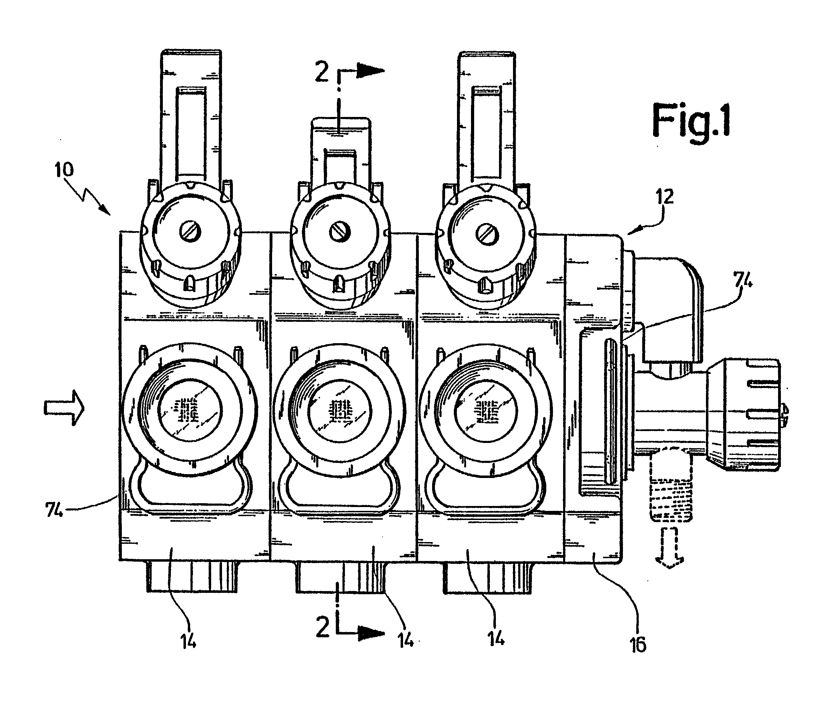

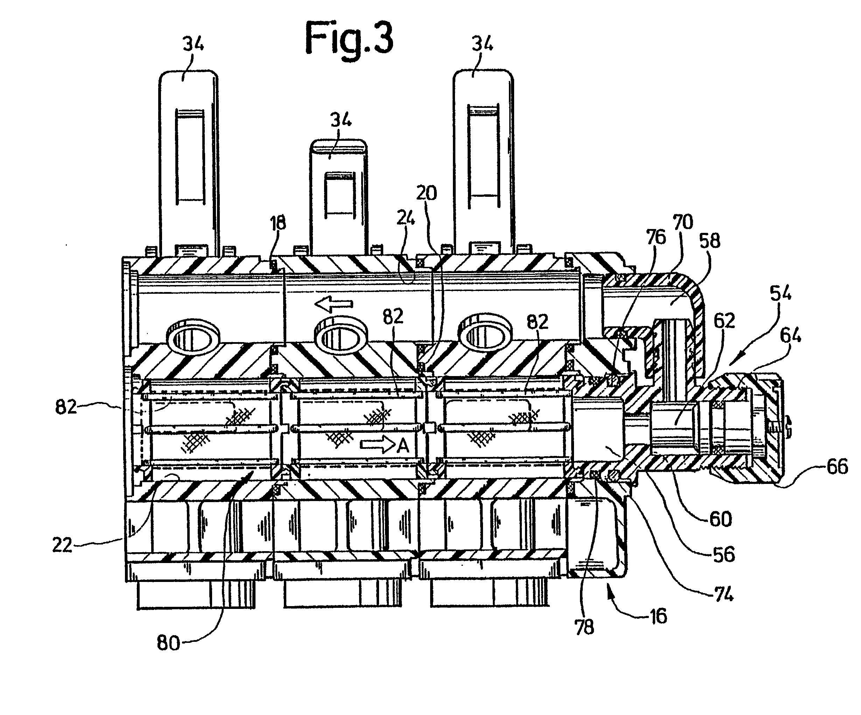

Die Fig. 1 zeigt die nicht ganz vollständige Verteileinrichtung 10, die ein Ventilgehäuse 12 besitzt, das aus mehreren Gehäusesegmenten 14 und zwei Gehäuse-Endsegmenten zusammengesetzt ist, von denen nur das Gehäuse-Endsegment 16 gezeichnet wurde. Die verschiedenen Segmente des Ventilgehäuses 12 werden beispielsweise durch nicht dargestellte, als Schrauben ausgebildete Zuganker zusammengehalten. Der stirnseitigen Abdichtung der Gehäusesegmente 14 und 16 gegeneinander dienen dabei O-Ringe 18 und 20, die sich aus Fig. 3 ergeben.

Die Gehäusesegmente 14 bilden mit Durchgangsöffnungen einen Zulauf-Längskanal 22, der von der Spritz- bzw. Sprühflüssigkeit in Richtung des in die Fig. 3 eingezeichneten Pfeils A durchströmt wird. Zweite Durchgangsöffnungen in den Gehäusesegmenten 14 bilden zusammen einen Rücklauf-Längskanal 24, welcher parallel zum Zulauf-Längskanal 22 verläuft.

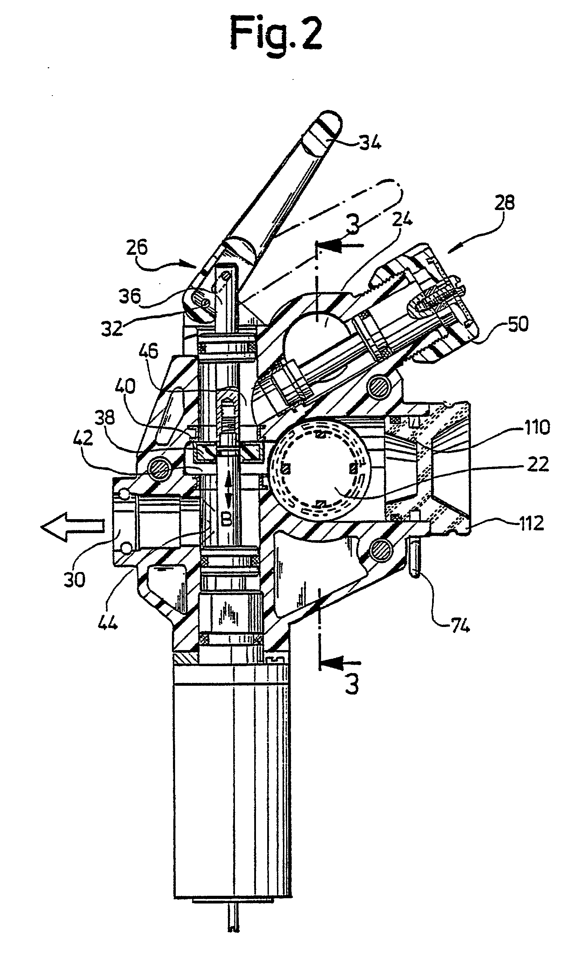

Wie besonders deutlich die Fig. 2 erkennen lässt, sind in jedes der Gehäusesegmente 14 ein sogenanntes Teilbreitenventil 26 und eine Gleichdruckdrossel 28 eingebaut. Mit Hilfe des Teilbreitenventils lässt sich der Zulauf-Längskanal 22 wahlweise mit einer Auslassöffnung 30 des betreffenden Gehäusesegments 14 oder mit dem Rücklauf-Längskanal 24 verbinden. Die Auslassöffnung 30 wird dann über einen Schlauch oder dergleichen mit dem zu dem betreffenden Gehäusesegment 14 gehörenden Leitungsabschnitt einer Feldspritzleitung verbunden. Wie bekannt, besitzt das Teilbreitenventil 26 einen um eine Achse 32 schwenkbaren Schnellverschlusshebel 34, mit dessen Hilfe ein Ventil schaft 36 in Richtung des Doppelpfeils B hin- und hergeschoben werden kann. An diesem Ventilschaft ist ein Ventilteller 38 befestigt, welcher mit einem oberen und einem unteren Ventilsitz 40 bzw. 42 zusammenwirkt. In der in Fig. 2 dargestellten Stellung gibt der Ventilteller 38 einen im Gehäusesegment 14 ausgebildeten Durchlass 44 vom Zulauf-Längskanal 22 zur Auslassöffnung 30 frei, während der Zulauf-längskanal 22 über einen Durchlass 46 mit dem Rücklauf-Längskanal 24 in Verbindung steht, wenn der Ventilteller 38 gegen den unteren Ventilsitz 42 angelegt wird, was dadurch geschieht, dass man den Schnellverschlusshebel 34 in die in Fig. 2 strichpunktiert dargestellte Schliessstellung schwenkt. Die Gleichdruckdrossel 28, die sich mit Hilfe eines Drehgriffs 50 verstellen lässt, dient dazu, zwischen dem Zulauf-Längskanal 22 und dem Rücklauf-Längskanal 24 eine Drossel einstellbaren Durchlassquerschnitts zu bilden, um den Druckabfall je Gehäusesegment 14 entlang dem Zulauf-Längskanal 22 unabhängig davon zu machen, ob das Teilbreitenventil 26 nun den Durchlass 44 zur Auslassöffnung 30 freigibt oder den Durchlass 46 zum Rücklauf-Längskanal 24.

Erfindungsgemäss ist in das Gehäuse-Endsegment 16 ein Reinigungsventil 54 eingebaut, welches einen mit dem Zulauf-Längskanal 22 fluchtenden Einströmkanal 56 und einen Auslaßstutzen 58 besitzt, zwischen denen sich im Gehäuse des Reinigungsventils ein Ventilsitz 60 befindet, der mit einem Ventilglied 62 zusammenwirkt, das sich mittels eines von einem Gewinde 64 gehaltenen Drehgriffs 66 in axialer Richtung verstellen lässt, um einen Durchlass zwischen dem Einströmkanal 56 und dem Auslaßstutzen 58 mehr oder minder zu öffnen. Bei der dargestellten Ausführungsform verbindet ein Rohrkrümmer 70 den Auslaßstutzen 58 mit dem Rücklauf-Längskanal 24, bei einer Drehung des Reinigungsventils 54 um 180° um die Längsachse des Zulauf-Längskanals 22 kann der Auslaßstutzen 58 aber auch einen Ablaßstutzen bilden.

Nach einem weiteren Merkmal der Erfindung dient eine haarnadelförmige Klammer 74 dazu, das Reinigungsventil 54 im Gehäuseendsegment 16 zu halten. Diese Klammer ist mit ihren beiden Schenkeln in nicht näher dargestellte, quer zur Längsrichtung der Kanäle 22 und 24 verlaufende Bohrungen des Gehäuseendsegments 16 sowie eine Umfangsnut 76 des Reinigungsventils 54 eingesteckt und hält so das letztere am Gehäuseendsegment 16 fest. Der Abdichtung des Reinigungsventils 54 im Gehäuseendsegment 16 dient ein O-Ring 78, der innerhalb der Klammer 74 liegt und so eine Leckage an den erwähnten Querbohrungen verhindert.

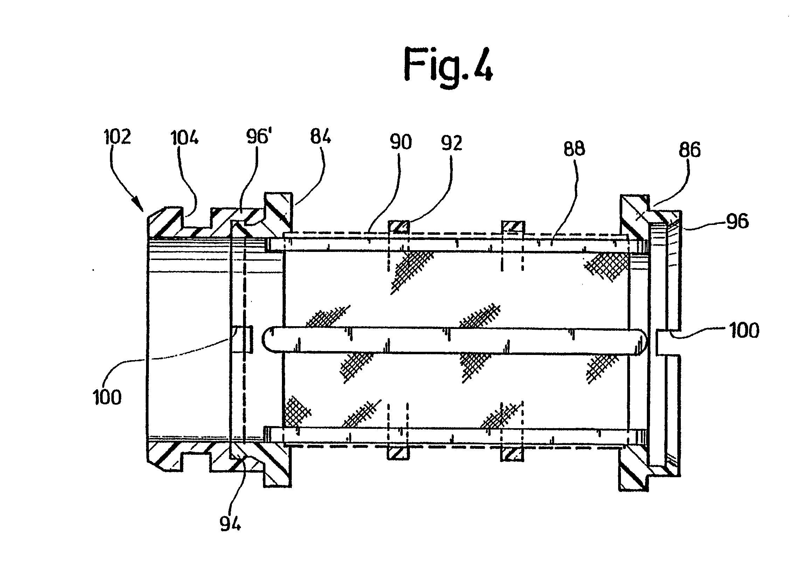

Wie besonders deutlich die Fig. 3 erkennen lässt, nimmt der Zulauf-Längskanal 22 einen als Ganzes mit 80 bezeichneten Siebzylinder auf, welcher abdichtend gegen das Reinigungsventil 54 stösst. Der Siebzylinder 80 ist aus ebensovielen Filtersegmenten 82 zusammengesetzt, wie das Ventilgehäuse 12 Gehäusesegmente 14 besitzt, und die Fig. 4 zeigt ein solches Filtersegment 82 im Detail.

Erfindungsgemäss handelt es sich bei den Filtersegmenten 82 um einstückige Kunststoff-Spritzgußteile mit zwei endseitigen Stirnringen 84 und 86, die durch Längsrippen 88 einstückig miteinander verbunden sind. Diese Längsrippen tragen das eigentliche zylindrische Sieb 90, welches in radialer Richtung nach aussen durch angeformte Verstärkungsringe 92 abgestützt wird.

Erfindungsgemäss sind die Stirnringe 84 und 86 mit komplementär ausgebildeten Rastelementen 94 und 96 versehen, welche vorteilhafterweise die Gestalt angeformter kurzer Stutzen besitzen, um so eine steife Verbindung zwischen den Filtersegmenten 82 herbeiführen zu können. Um das Ein- und Ausrasten der Filtersegmente aneinander zu erleichtern, besitzen die stutzenförmigen Rastelemente 94 und 96 an ihrem Umfang mehrere Schlitze 100.

Der Befestigung des Siebzylinders 80 im Ventilgehäuse 12 dient ein in Fig. 4 gezeigtes Anschlußstück 102, welches eine Umfangsnut 104 besitzt, um mit Hilfe einer Klammer 74 in derselben Weise an einem nicht dargestellten Gehäuse-Endsegment gehalten zu werden, wie dies beim Reinigungsventil 54 der Fall ist. Zweckmässigerweise dient auch am Anschlußstück 102 ein nicht dargestellter O-Ring der Abdichtung, so wie dies anhand des Reinigungsventils 54 beschrieben worden ist.

Da die Siebe 90 in radialer Richtung von innen nach aussen durchströmt werden, lagert sich Schmutz an der Innenseite des Siebs 90 ab. Die erfindungsgemässe Verteileinrichtung 10 erlaubt nun eine Spülung des Siebzylinders 80 dadurch, dass das Reinigungsventil 54 geöffnet wird, um so abgelagerten Schmutz in den Rücklauf-Längskanal 24 zu spülen oder, wenn der Auslaßstutzen 58 nicht mit dem Rücklauf-Längskanal 24 verbunden ist, ein Ausschwemmen des Schmutzes ins Freie zu ermöglichen.

Die erfindungsgemässe Verteileinrichtung 10 erlaubt eine Sichtkontrolle des Siebzylinders 80. Zu diesem Zweck ist in jedes der Gehäusesegmente 14 eine Öffnung 110 eingeformt, die sich mittels eines Stopfens 112 druckdicht verschliessen lässt, wobei der Stopfen mit einer Klammer 74 in derselben Weise gehalten werden kann, wie dies beim Reinigungsventil 54 der Fall ist. Die Achse der Öffnung 110 ist erfindungsgemäss auf die Längsachse des Zulauf-Längskanals 22 gerichtet, so dass man den Siebzylinder durch die aus klartransparentem Kunststoff bestehenden Stopfen 112 hindurch auf den Grad seiner Verschmutzung hin überprüfen kann.

Wie die Fig. 2 deutlich erkennen lässt, erleichtern die Öffnungen 110 zusammen mit den Durchlässen 44 auch die Montage der Teilbreitenventile 26.

Wie die Fig. 4 erkennen lässt, ist das Anschlußstück 102 erfindungsgemäss mit einem Rastelement 96′ versehen, welches dem Rastelement 96 der Filtersegmente 82 entspricht, so dass sich das Anschlußstück 102 auf das erste Filtersegment 82 des Siebzylinders 80 aufrasten lässt.

Natürlich wird eine Erfindung schon in dem Gedanken gesehen, den Siebzylinder im Zulauf-Längskanal 22 unterzubringen, um so ein besonderes Filtergehäuse einsparen zu können. Dieser Vorteil würde ja auch dann erzielt werden, wenn der Siebzylinder 80 nicht aus einzelnen Filtersegmenten 82 zusammengesetzt wäre.

Wenn der Siebzylinder 80 nicht segmentiert ist, kann auch auf ein Zusammensetzen des Ventilgehäuses 12 aus einzelnen Segmenten verzichtet werden.

Der Rücklauf-Längskanal muss nicht unbedingt innerhalb des Ventilgehäuses liegen, da es nur erforderlich ist, dass sich der Zulauf-Längskanal durch die Teilbreitenventile mit einer Rücklaufleitung verbinden lässt.

Die erfindungsgemässe Ventileinrichtung besitzt auch den Vorteil, dass sie die Einstellarmatur insgesamt kompakter werden lässt, da ein separates Druckfiltergehäuse entfällt.

**Patentansprüche**

1. Einstellarmatur zur Steuerung der Flüssigkeitszufuhr zu einer mehrere Leitungsabschnitte umfassenden Feldspritzleitung, welche ein Filter in Form eines Siebzylinders (80) für die Flüssigkeit sowie ein Ventilgehäuse (10) mit mehreren Gehäusesegmenten (14) aufweist, deren jedes ein Teilbreitenventil (26) zum Ein- bzw. Abschalten eines Leitungsabschnitts der Feldspritzleitung besitzt, wobei das Ventilgehäuse einen sich von einer Zulauföffnung des letzteren durch die Gehäusesegmente (14) hindurcherstreckenden Zulauf-Längskanal (22) sowie einen Rücklauf-Längskanal (24) bildet, der sich gleichfalls durch die Gehäusesegmente hindurcherstreckt und zu einer Rücklauföffnung des Gehäuses führt wobei ferner in jedem Gehäusesegment der Zulauf-Längskanal durch das Teilbreitenventil (26) wahlweise mit einer an die Felspritzleitung angschliessbaren Auslaussöffnung (30) des Gehäusesegments (14) oder mit dem Rücklauf-Längskanal (24) verbindbar ist, dadurch gekennzeichnet, dass der Siebzylinder (80) in den Zulauf-Längskanal (22) eingesetzt und in seiner Längsrichtung aus den Gehäusesegmenten (14) zugeordneten Filtersegmenten (82) zusammengesetzt ist.

2. Einstellarmatur nach Anspruch 1, dadurch gekennzeichnet, dass die Filtersegmente (82) identisch ausgebildet sind.

3. Einstellarmatur nach Anspruch 1 oder 2, dadurch gekennzeichnet, dass die Filtersegmente (82) an ihren Enden Rastelemente (94, 96) zum Verrasten der Filtersegmente aneinander aufweisen.

4. Einstellarmatur nach einem oder mehreren der Ansprüche 1 bis 3, dadurch gekennzeichnet, dass die Länge der Filtersegmente (82) gleich der Länge des zugehörigen Gehäusesegments (14) ist.

5. Einstellarmatur nach einem oder mehreren der Ansprüche 1 bis 4, dadurch gekennzeichnet, dass das Filter (80) ein in der Zulauföffnung liegendes Anschlußstück (102) aufweist, welches mittels eines Sicherungselements (74) sowie einer Dichtung (78) lösbar abgedichtet im Ventilgehäuse (12) angeordnet ist.

6. Einstellarmatur nach den Ansprüchen 3 und 5, dadurch gekennzeichnet, dass das Anschlußstück 102 in gleicher Weise wie ein Filtersegment (82) mit dem ersten Filtersegment verrastbar ist.

7. Einstellarmatur nach Anspruch 5 oder 6, dadurch gekennzeichnet, dass das Sicherungselement (74) eine haarnadelförmige Klammer ist, deren Schenkel von aussen in Querbohrungen des Ventilgehäuses sowie in eine Aussenumfangsnut (104) des Filters (80) einschiebbar sind.

8. Einstellarmatur nach den Ansprüchen 5 und 7, dadurch gekennzeichnet, dass sich die Aussenumfangsnut (104) am Anschlußstück (102) befindet.

9. Einstellarmatur nach einem oder mehreren der Ansprüche 1 bis 8, dadurch gekennzeichnet, dass die Gehäusesegmente (14) ein Kontrollfenster (110, 112) zur optischen Prüfung des Verschmutzungsgrads des Filters (80) besitzen.

10. Einstellarmatur nach Anspruch 9, dadurch gekennzeichnet, dass das Kontrollfenster als durch einen durchsichtigen, vorzugsweise eingeschraubten Stopfen (112) verschlossene Gehäuseöffnung (110) ausgebildet ist.

## Revendications

1. Dispositif de réglage pour la commande de l'alimentation en liquide d'une conduite d'arrosage de champs comprenant plusieurs sections de conduite et présentant un filtre sous la forme d'un cylindre perforé (80) destiné au liquide ainsi qu'un carter de soupapes (10) comportant plusieurs segments de carter (14), dont chacun possède une soupape appliquée sur une partie de la largeur (26) destinée à mettre en service ou respectivement hors service une section de la conduite d'arrosage de champs, le carter de soupapes formant un canal longitudinal d'arrivée (22) qui s'étend à travers les segments de carter (14) à partir d'une ouverture d'arrivée dudit carter, ainsi qu'un canal longitudinal de retour (24), qui s'étend également à travers les segments de carter et qui conduit à une ouverture de retour du carter, le canal longitudinal d'arrivée pouvant, en outre, dans chaque segment de carter, être relié, au choix, à une ouverture de sortie (30) du segment de carter (14), raccordable à la conduite d'arrosage de champs, ou au canal longitudinal de retour (24), par la soupape appliquée sur une partie de la largeur (26), caractérisé en ce que le cylindre perforé (80) est introduit dans le canal longitudinal d'arrivée (22) et en ce que, dans sa direction longitudinale, il est composé de segments de filtre (82) qui sont adjoints aux segments de carter (14).

2. Dispositif de réglage suivant la revendication 1, caractérisé en ce que les segments de filtre (82) sont réalisés de manière identique.

3. Dispositif de réglage suivant la revendication 1 ou 2, caractérisé en ce que les segments de filtre (82) présentent des éléments d'encliquetage (94, 96) à leurs extrémités pour encliqueter les segments de filtre l'un sur l'autre.

4. Dispositif de réglage suivant une ou plusieurs revendications 1 à 3, caractérisé en ce que la longueur des segments de filtre (82) est égale à celle du segment de carter correspondant (14).

5. Dispositif de réglage suivant une ou plusieurs des revendications 1 à 4, caractérisé en ce que le filtre (80) présente une pièce de raccordement (102) qui se trouve dans l'ouverture d'arrivée et qui est agencée dans le carter de soupapes (12) de manière détachable et étanche à l'aide d'un élément de sécurité (74) ainsi que d'un joint (78).

6. Dispositif de réglage suivant les revendications 3 et 5, caractérisé en ce que la pièce de raccordement (102) peut être encliquetée au premier segment de filtre de la même manière qu'un segment de filtre (82).

7. Dispositif de réglage suivant la revendication 5 ou 6, caractérisé en ce que l'élément de sécurité (74) est une pince en forme d'épingle à cheveux, dont les branches peuvent être enfoncées à partir de l'extérieur dans des trous transversaux du carter de soupapes ainsi que dans une rainure périphérique externe (104) du filtre (80).

8. Dispositif de réglage suivant les revendications 5 et 7, caractérisé en ce que la rainure périphérique externe (104) se trouve sur la pièce de raccordement (102).

9. Dispositif de réglage suivant une ou plusieurs des revendications 1 à 8, caractérisé en ce que les segments de carter (14) possèdent une fenêtre de contrôle (110, 112), destinée au contrôle optique du degré d'encrassement du filtre (80).

10. Dispositif de réglage suivant la revendication 9, caractérisé en ce que la fenêtre de contrôle est réalisée sous la forme d'une ouverture de carter (110) fermée par un bouchon transparent, de préférence vissé (112).

## Claims

1. Control device for controlling the supply of liquid to a field spraying conduit comprising a plurality of conduit sections, said control device including a filter in the form of a cylindrical screen (80) for the liquid as well as a valve housing (10) having a plurality of housing segments (14), each of said segments having a partial width control valve (26) for switching a conduit section of said field spraying conduit on and off, the valve housing forming a longitudinal inlet channel (22) extending from an inlet opening of said housing through said housing segments (14) as well as a longitudinal return channel (24) also extending through said housing segments and leading to a return opening of said housing and, in addition, in each housing segment said longitudinal inlet channel being selectively connectable via said partial width control valve (26) with an outlet opening (30) of said housing segment (14) adapted to be connected to said field spraying conduit or with said longitudinal return channel (24), characterized in that said cylindrical screen (80) is inserted into said longitudinal inlet channel (22) and composed in its longitudinal direction of filter segments (82) associated with said housing segments (14).

2. Control device as defined in claim 1, characterized in that said filter segments (28) are of identical design.

3. Control device as defined in claim 1 or 2, characterized in that said filter segments (82) have locking elements (94, 96) at their ends for interlocking the filter segments with one another.

4. Control device as defined in any or several of claims 1 to 3, characterized in that the length of said filter segments (82) is equal to the length of the associated housing segment (14).

5. Control device as defined in any or several of claims 1 to 4, characterized in that said filter (80) includes a connecting member (102) located in the inlet opening and arranged in a releasably sealing manner in said valve housing (12) by means of a retaining member (74) and a seal (78).

6. Control device as defined in claims 3 and 5, characterized in that said connecting member (102) is adapted to be interlocked with the first filter segment in the same manner as a filter segment (82).

7. Control device as defined in claim 5 or 6, characterized in that said retaining member (74) is a clamp in the form of a hairpin having arms adapted to be inserted from outside into transverse bores of said valve housing and an external circumferential groove (104) of said filter (80).

8. Control device as defined in claims 5 and 7, characterized in that said external circumferential groove (104) is located on said connecting member (102).

9. Control device as defined in any or several of claims 1 to 8, characterized in that said housing segments (14) include a control window (110, 112) for optical examination of the degree of soiling of said filter (80).

10. Control device as defined in claim 9, characterized in that said control window is designed as a housing opening (110) closed by a transparent, preferably screwed-in plug (112).

Fig.1

# Fig.2

# Fig.3

EP 0 253 388 B1

# Fig.4

EP 0 253 388 B1